# EUROPÄISCHE PATENTSCHRIFT

(11) **EP 0 901 901 B1**
(45) Veröffentlichungstag und Bekanntmachung des Hinweises auf die Patenterteilung: **04.06.2003**
(21) Anmeldenummer: 98116402.3
(22) Anmeldetag: 29.08.1998
(51) Int. Cl.: B32B 31/20

(54) **Verfahren und Vorrichtung zum Verbinden vorzugsweise flexibler Flächengebilde**
Method and apparatus for laminating flexible webs
Procédé et dispositif pour assembler des bandes souples

(30) Priorität: 05.09.1997 DE 19739042
(43) Veröffentlichungstag der Anmeldung: 17.03.1999
(73) Patentinhaber: SCHAETTI AG, 8304 Wallisellen (CH)
(72) Erfinder: Kannegiesser, Martin, 32103 Bad Salzuflen (DE); Inselmann, Jürgen, 32584 Löhne (DE)
(74) Vertreter: Patentanwälte Feldmann & Partner AG

(56) Entgegenhaltungen:
- EP-A- 0 598 960
- DE-A- 19 604 726
- DE-U- 8 710 695
- FR-A- 350 982
- GB-A- 2 111 408
- US-A- 3 533 886

## Beschreibung

Die Erfindung betrifft ein Verfahren zum Verbinden vorzugsweise flexibler Flächengebilde gemäß dem Oberbegriff des Anspruchs 1. Des weiteren betrifft die Erfindung eine Vorrichtung zum Verbinden vorzugsweise flexibler Flächengebilde gemäß dem Oberbegriff des weiteren unabhängigen Patentanspruchs.

Die Erfindung bezieht sich auf das Verbinden flexibler Flächengebilde durch Verkleben. Zur Verklebung wird eine Haftmasse verwendet, die üblicherweise selbst die Gestalt eines Flächengebildes aufweist. Es ist aber auch denkbar, daß die Haftmasse bereits einem oder mehreren der zu verbindenden Flächengebilde in anderer Weise zugeordnet ist.

Die Verklebung erfolgt unter Anwendung von Wärme und Druck, wobei die durch die Wärme plastifizierte Haftmasse teilweise in die zu verbindenden Flächengebilde eindringt und so die Verbindung derselben bewirkt. Im Fachjargon wird diese Art der Verbindung von Flächengebilden auch als Laminieren bezeichnet.

Bei den Flächengebilden handelt es sich üblicherweise um textile Flächengebilde. Es können aber auch Flächengebilde aus anderen ungewebten Materialien, beispielsweise Folien, Netze oder Vliese zur Anwendung kommen. Die zu verbindenden Flächengebilde liegen üblicherweise in Bahnform vor. Es ist aber auch denkbar, daß mindestens einige der Flächengebilde in bereits zugeschnittener Form verarbeitet werden.

Bekannt sind Vorrichtung zum Verbinden flexibler Flächengebilde, die eine einzige Laminierstation mit zwei umlaufenden Transportbändern aufweisen, wobei zwischen den zueinandergerichteten Trumen der Transportbänder die zu verbindenden Flächengebilde durch die Laminierstation transportiert werden. Im Bereich der Laminierstation befindet sich eine Heizstation, mit der die Haftmasse aktiviert und die zu verbindenden Flächengebilde erwärmt werden. An die Heizstation schließt eine Druckeinrichtung an, mit der die zu verbindenden Flächengebilde zusammengedrückt werden, wobei die vorher plastifizierte Haftmasse mindestens teilweise in die zu verbindenden Flächengebilde eindringt. Solche Laminierstationen lassen nur eine begrenzte Laminierleistung zu. Sind höhere Laminierleistungen erforderlich, muß eine entsprechend größere und leistungsstärkere Laminierstation verwendet werden, deren Laminierleistung vielfach nicht voll ausgenutzt wird. Das führt zu einer unwirtschaftlichen Betriebsweise solcher Laminierstationen.

Die Offenlegungsschrift DE-A-196'04'726 lehrt ein Verfahren zum Herstellen einer mehrlagigen Bahn, in welchem ein flexibles Flächengebilde in zwei aufeinanderfolgenden Stationen behandelt wird. In einer Thermofusioniereinrichtung wird zunächst ein Vliesstoff vernetzt. In einer Kaschiereinrichtung wird danach ein Bezugsstoff mit Hilfe von Klebefaservlies auf den Vliesstoff aufkaschiert. Bei einer derartigen Bearbeitung in zwei oder mehreren Stationen können bereits kleine Unterschiede in den Transportgeschwindigkeiten aufeinanderfolgender Stationen zu unerwünschten Effekten wie Faltenbildung führen. Ausserdem ist die Eigenspannung des flexiblen Flächengebides in einzelnen Stationen schlecht kontrollierbar.

Hiervon ausgehend liegt der erfindung die Aufgabe zugrunde, ein Verfahren und eine Vorrichtung zum Verbinden, insbesondere Laminieren, von flexiblen Flächengebilden zu schaffen, welche einen flexiblen und wirtschaftlichen Betrieb gewährleisten, aber die oben beschriebenen Nachteile nicht aufweisen.

Ein Verfahren zur Lösung dieser Aufgabe weist die Maßnahmen des Anspruchs 1 auf. Demnach erfolgt die Verbindung der Flächengebilde längs mehrerer in Förder- und bzw. Behandlungsrichtung aufeinanderfolgende Stationen. Durch die Aufeinanderfolge der Stationen ist es möglich, diese als selbständige Einheiten auszubilden, wodurch das Verfahren es ermöglicht, eine den Bedürfnissen gerecht werdende Laminierstraße zum Verbinden der Flächengebilde zu bilden. Die einzelnen Stationen ermöglichen einen bedarfsweisen Ausbau der Laminierstraße, wodurch eine Leistungserhöhung derselben unter Verwendung bisheriger Stationen möglich ist.

Zwischen zwei aufeinanderfolgenden Stationen wird die Spannung mindestens eines der bahnförmigen Flächengebilde ermittelt. Aufgrund der zwischen aufeinanderfolgenden Stationen ermittelten Spannung mindestens eines Flächengebildes kann die Transportgeschwindigkeit der Flächengebilde so gesteuert werden, daß die Spannung der Bahn der textilen Flächengebilde so auf die Haftmasse eingestellt ist, daß diese mit ausreichender Tiefe in die Flächengebilde eindringen kann. Des weiteren können durch die Bahnspannung Verdichtungs- und Glättungseffekte der bahnförmigen Flächengebilde erzielt werden.

Zur Weiterbildung des Verfahrens ist vorgesehen, zwischen aufeinanderfolgenden thermischen Behandlungen in entsprechenden Stationen (Laminierstationen) mindestens den Feuchtigkeitsgehalt einiger Flächengebilde zu reduzieren. Dieses ist besonders durch die erfindungsgemäße Aufeinanderfolge einzelner, vorzugsweise selbständiger Stationen möglich, indem zwischen den Stationen entsprechender Raum gebildet wird, der notwendig ist, um mindestens einigen Flächengebilde in ausreichendem Maße Feuchtigkeit oder dergleichen zu entziehen, bevor diese Flächengebilde in der nächsten Station vorzugsweise thermisch behandelt werden.

Es ist weiterhin vorgesehen, mindestens eine Station, insbesondere eine nach einer ersten Station folgende Station wahlweise so zu betreiben, daß damit die Flächengebilde entweder erwärmt oder gekühlt oder sowohl erwärmt als auch gekühlt werden. Dadurch erhält die aus den aufeinanderfolgenden Stationen zusammengesetzte Laminierstraße eine nochmals verbesserte Flexibilität, weil auch eine solche Station (oder auch mehrere Stationen), die momentan nicht zur Erwärmung der Flächengebilde benötigt wird, leistungssteigernd einsetzbar ist, indem sie die miteinander durch Laminieren verbundenen Flächengebilde kühlt.

Gemäß einer weiteren Ausgestaltung des Verfahren wird mindestens ein Flächengebilde zwischen aufeinanderfolgenden Stationen zugeführt. Dieses Flächengebilde durchläuft dann nicht die vorangegangene Station oder mehrere vorgeordnete Stationen. Dadurch können unterschiedlich empfindliche Flächengebilde verarbeitet werden und gegebenenfalls auch unterschiedliche Verbindungstechniken zum Einsatz kommen.

Gemäß einer vorteilhaften Weiterbildung des Verfahrens ist vorgesehen, zwischen mindestens zwei Stationen die bahnartigen Flächengebilde außer Eingriff mit dem oder jedem Transportband zu bringen. Die Außenseiten der textilen Flächengebilde liegen dadurch zwischen aufeinanderfolgenden Stationen frei. Das begünstigt ein Abkühlen und Ausdunsten der in der vorangegangenen Station behandelten Flächengebilde. Insbesondere ist so eine wirksame Feuchtigkeitsreduzierung der zwischen aufeinanderfolgenden Stationen freiliegenden Flächengebilde möglich.

Eine Vorrichtung zur Lösung der der Erfindung zugrundeliegenden Aufgabe weist die Merkmale des Anspruchs 9 auf. Dadurch, daß erfindungsgemäße mindestens zwei aufeinanderfolgende, eigenständige Laminierstationen vorgesehen sind, ist es möglich, die Vorrichtung bedarfsweise zu erweitern. Wird der volle Leistungsbedarf der Vorrichtung nicht benötigt, kann eine Laminierstation ausgeschaltet bleiben, wodurch sich eine Energieersparung ergibt.

Zwischen mindestens zwei mit Abstand aufeinanderfolgenden Laminierstationen ist eine Meßstation angebracht. Die Meßstation dient dazu, die Zugkraft der Bahn aus mindestens einem Flächengebilde, vorzugsweise bereits mehreren miteinander verklebten Flächengebilden, zu ermitteln und bedarfsweise so zu verändern, daß die Bahn mindestens durch die darauffolgende Laminierstation mit einer bestimmten Eigenspannung transportiert wird, was insbesondere zur Glättung und zur Steuerung der Eindringtiefe der plastifizierten Haftmasse in die Flächengebilde dient.

Die Meßstation ist vorzugsweise gebildet aus drei mit Abstand parallel zueinander verlaufenden Walzen, die an einer gemeinsamen Lagereinrichtung fest im Bereich der Meßstation zwischen zwei aufeinanderfolgenden Laminierstationen angeordnet ist. Zwei Walzen sind vorzugsweise als Führungswalzen ausgebildet, zwischen denen die dritte, als Meßwalze ausgebildete Walze angeordnet ist, und zwar derart, daß sie die Bahn der Flächengebilde aus der Ebene der beiden äußeren Führungswalzen herausbewegt. Dabei wird an den Lagern der Meßwalze eine Lagerkraft erzeugt, die ermittelt und an eine Einrichtung, vorzugsweise einen Mikrocomputer oder dergleichen, weitergegeben wird, wobei die Einrichtung in Abhängigkeit von den ermittelten Meßwerten an der Meßwalze und den vorgegebenen Bahnspannungen die nachfolgende Laminierstation insbesondere hinsichtlich der Transportgeschwindigkeit der Flächengebilde steuert.

Gemäß einer bevorzugten Weiterbildung der Vorrichtung ist mindestens zwischen zwei aufeinanderfolgenden Laminierstationen eine Trockenstation angeordnet. Diese Trockenstation läßt sich zwischen den einzelnen aufeinanderfolgenden Laminierstationen einfach unterbringen. Außerdem verbessert das Trocknen der eine Laminierstation verlassenden Flächengebilde die Wirsamkeit einer nachfolgenden Laminierstation. Darüber hinaus lassen sich durch das aufeinanderfolgende, abschnittsweise Laminieren mit zwischengeschalteten Trocknungsvorgängen höhere Bearbeitungsgeschwindigkeiten erzielen, so daß die Laminierleistung mit aufeinanderfolgenden Laminierstationen höher ist als mit einer Laminierstation der gleichen Leistung der einzelnen aufeinanderfolgenden Laminierstationen.

Vorzugsweise ist im Bereich der Trockenstation nur ein vorzugsweise unteres Transportband vorhanden. Dadurch sind die Flächengebilde von der Oberseite her unabgedeckt, so daß ihnen wirksam Feuchtigkeit in der Trockenstation entzogen werden kann. Die Wirksamkeit der Trockenstation läßt sich noch erhöhen, wenn im Bereich derselben gemäß einer vorteilhaften Weiterbildung der Erfindung das oder jedes flexible Flächengebilde vom unteren Transportband abgelenkt wird. Dann sind die bahnförmigen Flächengebilde (oder auch nur ein einzelnes bahnförmiges Flächengebilde) beidseitig frei, was eine noch wirksamere Entfeuchtung und Ausdunstung im Bereich der Trockenstation zuläßt.

Gemäß einer bevorzugten Ausgestaltung der Vorrichtung ist die Meßstation der Trockenstation zwischen zwei aufeinanderfolgenden Laminierstationen zugeordnet, wobei insbesondere die Führungswalzen der Meßstation gleichzeitig dazu dienen, die Bahn des textilen Flächengebildes vom unteren Transportband abzulenken, so daß die Bahn beidseitig freiliegt.

Ein Ausführungsbeispiel der erfindungsgemäßen Vorrichtung und des Verfahrens werden nachfolgend anhand der Zeichnung näher erläutert. In dieser zeigen:

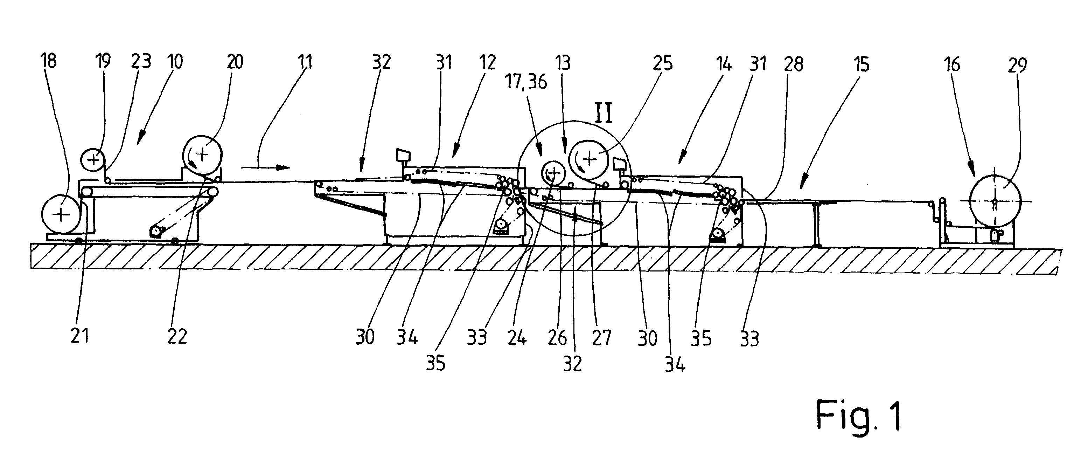

- Fig. 1: eine schematische Seitenansicht der Vorrichtung,
- Fig. 2: eine vergrößerte Einzelheit II aus der Fig. 1 im Bereich einer Trockenstation zwischen zwei aufeinanderfolgenden Laminierstationen.

Die hier gezeigte Vorrichtung betrifft eine Laminierstraße zum Verkleben von mindestens teilweise bahnförmigen, flexiblen Flächengebilden. Das Verkleben der Flächengebilde erfolgt unter Anwendung von Wärme und Druck durch eine plastifizierte Haftmasse, die den zu verbindenden Flächengebilden gegebenenfalls auch als bahnförmiges Flächengebilde zugeführt werden kann. Bei den Flächengebilden kann es sich sowohl um textile Flächengebilde als auch um ungewebte Flächengebilde, beispielsweise Folien, Netze oder Vliese handeln.

Die hier gezeigte Laminierstraße verfügt über eine Abwickelstation 10, auf der in Behandlungsrichtung, insbesondere in Laminierrichtung 11, eine erste Laminierstation 12, eine zweite Abwickelstation 13, eine zweite Laminierstation 14, eine Luftkühlstation 15 und eine Aufwickelstation 16 folgen.

Zwischen den aufeinanderfolgenden Laminierstationen 12 und 14 ist etwa im Bereich der zweiten Abwickelstation 13 eine Trockenstation 17 angeordnet.

Die hier beispielhaft gezeigte Laminierstraße weist im Bereich der ersten Abwickelstation 10 drei Vorratsrollen 18, 19, 20 auf, von denen jeweils ein bahnförmiges Flächengebilde in Laminierrichtung 11 abgewickelt wird. Die Vorratsrolen 18 und 20 weisen die zu verbindenden, außenliegenden Flächengebilde 21 und 22 auf. Von der Vorratsrolle 19 wird ein mittleres Flächengebilde 23 abgerollt, bei dem es sich vorzugsweise um das bahnförmige Haftmittel zum Verkleben der äußeren Flächengebilde 21, 22 handelt. Dieses mittlere Flächengebilde 23 geht nach dem Verkleben der äußeren Flächengebilde 21 und 22 in diese über, ist also danach praktisch nicht mehr als separates Flächengebilde 23 zwischen den äußeren Flächengebilden 21 und 22 vorhanden.

Im gezeigten Ausführungsbeispiel sind der zweiten Abwickelstation 13 zwischen den aufeinanderfolgenden Laminierstationen 12 und 14 zwei weitere Vorratsrollen 24, 25 zugeordnet, von denen zwei weitere bahnartige Flächengebilde 26 und 27 abziehbar sind. Beim von der Vorratsrolle 25 kommenden außenliegenden Flächengebilde 27 kann es sich um ein solches handeln, was zusätzlich mit den Flächengebilden 21 und 22 zu verkleben ist. Diese Verklebung erfolgt durch das von der Vorratsrolle 24 kommende Flächengebilde 26, bei dem es sich wiederum um ein bahnförmiges Haftmaterial handelt. Auch das Flächengebilde 26 verliert nach dem Verkleben des Flächengebildes 27 mit dem Flächengebilde 22 seine Selbständigkeit, indem es zwischen den Flächengebilden 22 und 27 sozusagen aufgeht. Die zweite Laminierstaton 14 verläßt deshalb eine Laminatbahn 28 aus den drei miteinander verbundenen Flächengebilden 21, 22 und 27. Diese Laminatbahn 28 wird in der Aufwickelstation 16 auf eine Vorratsrolle 29 aufgewickelt.

Die beiden Laminierstationen 12 und 14 sind bei der hier gezeigten Laminierstraße im wesentlichen gleich ausgebildet. Im folgenden wird der Aufbau der ersten Laminierstaton 12 beschrieben. Diese Beschreibung gilt stellvertretend auch für die zweite Laminerstation 14, wobei für gleiche Teile gleiche Bezugsziffern verwendet werden.

Die Laminierstation 12 verfügt über ein unteres Transportband 30 und ein oberes Transportband 31. Das obere Transportband 31 erstreckt sich nur über einen Teil der Länge des unteren Transportbandes 30. Im gezeigten Ausführungsbeispiel überdeckt das obere Transportband 30 etwas mehr als die halbe Länge des unteren Transportbandes 31. Dabei ragt das untere Transportband 30 auf einer in Laminierrichtung 11 vornliegenden Beschickungsseite 32 gegenüber dem oberen Transportband 31 vor. An einer in Laminierrichtung 11 hinten liegenden Auslaufseite 33 der Laminierstation 12 liegen die Enden des oberen Transportbandes 31 und des unteren Transportbandes 30 etwa übereinander. Vorzugsweise werden beide Transportbänder 30 und 31 synchron angetrieben, wonei zwischen den zueinandergerichteten Trumen des unteren Transportbandes 30 und des oberen Transportbandes 31 die bahnförmigen Flächengebilde, hier die Flächengebilde 21, 22 und 23, durch die Laminierstation 12 hindurchtransportiert werden.

Die Laminierstation 12 weist im Inneren, und zwar etwa entlang eines Teils des kürzeren oberen Transportbandes 31 eine Heizeinrichtung 34 auf, auf die in Laminierrichtung 11 eine Druckeinrichtung 35 folgt. Die Heizstation 34, die Druckeinrichtung 35 und auch die übrige Ausgestaltung der Laminierstation 12 sind an sich bekannt, und zwar beispielsweise aus der DE 35 02 608 C2 und der DE 42 15 028 C2.

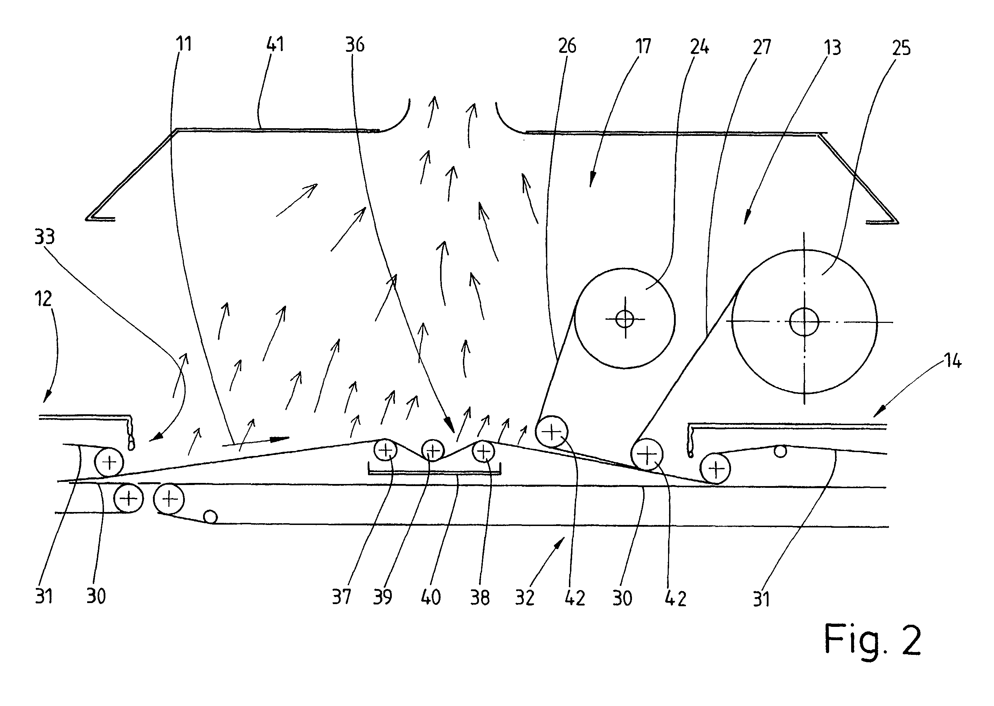

Hinter der ersten Laminierstation 12 ist die zweite Laminerstation 14 derart angeordnet, daß das an der Beschickungsseite 32 gegenüber dem oberen (kürzeren) Transportband 31 vorstehende untere (längere) Transportband 30 auf das untere Transportband 30 der ersten Laminierstation 12 folgt. Die unteren Transportbänder 30 der beiden Laminierstationen 12 und 14 bilden dadurch eine durchgehende Förderstrecke für die Flächengebilde 21, 22 und 23. Wegen des kürzeren oberen Transportbandes 31 befindet sich zwischen den aufeinanderfolgenden Laminierstationen 12 und 14 ein Bereich, in dem die Flächengebilde 21, 22 und 23 an der Oberseite nicht abgedeckt sind, also frei liegen. In diesem Bereich, also an der Beschickungsseite 32 der zweiten Laminierstation 14, befindet sich die Trockenstation 17. Bei der hier gezeigten Vorrichtung ist der Trockenstation 17 gleichzeitig die zweite Abwickelstation 13 und eine Meßstation 36 (Fig. 2) zugeordnet.

Die Meßstation 36 befindet sich etwa in der Mitte zwischen den Enden des oberen Transportbandes 31 und des unteren Transportbandes 30 der ersten Laminierstation 12 und des oberen Transportbandes 31 der zweiten Laminierstation 14. Gebildet ist die Meßstation 36 aus drei parallelen, quer zur Laminierrichtung 11 verlaufenden Walzen. Es handelt sich dabei um zwei äußere Führungswalzen 37, 38 und eine mittig dazwischen angeordnete Meßwalze 39. Gegenüberliegende Enden der Führungswalzen 37, 38 und der Meßwalze 39 sind in einem in der Fig. 2 nicht gezeigten, feststehenden Rahmen der Meßstation 36 gelagert. Vorzugsweise liegen dabei die Längsmittelachsen der Führungswalzen 37, 38 und der Meßwalze 39 in einer gemeinsamen, horizontalen Ebene. Die Meßstation 36 wird nur von den aus der ersten Laminierstation 12 kommenden bahnförmigen Flächengebilden 21, 22 und 23 durchlaufen, und zwar derart, daß die Flächengebilde 21, 22 und 23 über den Führungswalzen 37, 38 entlanglaufen, hingegen die mittige Meßwalze 39 an der Unterseite passieren. Dadurch wird von der Meßwalze 39 die Bahn der Flächengebilde 21, 22, 23 zwischen den Führungswalzen 37, 38 aus ihrer Ebene etwa dreieckförmig herausgelenkt, wodurch die Spannung der Bahn der Flächengebilde 21, 22, 23 auf die Meßwalze 39 eine aufwärtsgerichtete Reaktionskraft ausübt.

Diese wird an mindestens einem Lager der Meßwalze 39 durch einen entsprechenden Kraftaufnehmer ermittelt.
Der oder jeder Kraftaufnehmer der Meßwalze 39 ist verbunden mit einer Steuerung mindestens der zweiten Laminierstation 14, und zwar derart, daß die Meßsignale des oder jedes Meßwertaufnehmers der Meßwalze 39 in der Steuerung in signale umgewandelt werden, die der Zugspannung der Bahn der Flächengebilde 21, 22, 23 entsprechen. Dadurch erhält die Steuerung mindestens der zweiten Laminierstation 14 Informationen über die derzeitige Spannung der Bahn der Flächengebilde 21, 22, 23 in der Meßstation 36. Diese Bahnspannung kann mit einer in der Steuerung eingegebenen, gewünschten Bahnspannung in Einklang gebracht werden, indem die Steuerung den Antrieb des obren Transportbandes 31 und des unteren Transportbandes 30 der zweiten Laminierstation 14 überwacht und hinsichtlich der Geschwindigkeit entsprechend einstellt bzw. regelt.

Die Meßstation 36 in Verbindung mit einer entsprechenden Steuerung oder Regelung der Antriebsgeschwindigkeiten der Transportbänder 30 und 31 der zweiten Laminierstation 14 lassen es zu, die in dieser Laminerstation erfolgende Behandlung der Flächengebilde 21, 22 23, 26 und 27 individuell auf das jeweilige Haftmittel und das Material der zu verbindenden Flächengebilde 21, 22 und 27 einzustellen. Es können darüber hinaus besondere Verdichtungs- und Glättungseffekte der Flächengebilde 21, 22 und 27 erzielt werden.

Die Längsmittelachse der Führungswalzen 37, 38 und der Meßwalze 39 sind mit einem solchen Abstand oberhalb des Obertrums des unteren Transportbandes 30 der zweiten Laminierstation 14 angeordnet, daß weder die Führungswalzen 37, 38 noch die Meßwalze 39 am Obertrum des unteren Transportbandes 30 anliegen, vielmehr zwischen den Führungswalzen 37, 38 und der Meßwalze 39 sowie dem Obertrum des unteren Transportbandes 30 ein Spaltraum entsteht. In diesem Spaltraum ist unterhalb der Führungswalzen 37, 38 und der Meßwalze 39 eine Auffangwanne 40 von den Flächengebilden 21, 22, 23 im Bereich der Meßstation 36 abtropfende Flüssigkeit oder dergleichen angeordnet.

Durch die Anordnung der Führungswalzen 37, 38 und der Meßwalze 39 mit Abstand oberhalb des unteren Transportbandes 30 wird in der Meßstation 36 von den Führungswalzen 37, 38 und der Meßwalze 39 die Bahn der Flächengebilde 21, 22, 23 vom Obertrum des unteren Transportbandes 30 der zweiten Laminierstation 14 abgehoben, so daß im Bereich der mit Abstand aufeinanderfolgenden oberen Transportbänder 31 der Laminierstationen 12 und 14 die Bahn der Flächengebilde 21, 22, 23 beidseitig freiliegt, wodurch eine Ausrüstung abdampfen und Feuchtigkeit entweichen kann. Die entweichende Feuchtigkeit und Ausrüstung wird von einer Absaughaube 41 oberhalb des im Bereich der Trockenstation 17 von den oberen Transportbändern 31 freigelassenen Beschickungsseite 32 der zweiten Laminierstation 14 abgeführt.

Hinter der Meßstation 36, aber vor dem oberen Transportband 31 der zweiten Laminierstation 14, sind Umlenkrollen 42 angeordnet, die die bahnförmigen Flächengebilde 26 und 27, die von den Vorratsrollen 24 und 25 der zweiten Abwickelstation 13 abgewickelt werden, von oben auf die Bahn der bereits in der ersten Laminierstation 12 laminierten Flächengebilde 21, 22 und zufuhren. In die Beschickungsseite 32 der zweiten Laminierstation 14 laufen dann die beiden Flächengebilde 21 und 22 mit der durch die vorangegangene Laminierung in der Laminierstation 12 zwischen denselben aufgegangenen Flächengebilde 23 sowie die vor der zweiten Laminierstation 14 zugeführten Flächengebilde 26 und 27 ein.

Nach dem Verlassen der zweiten Laminierstation 14 wird die fertige Laminatbahn 28 in der Luftkühlstation 15 abgekühlt und auf die Vorratsrolle 29 in der Aufwickelstation 16 aufgerollt.

Die Bahnspannung in der ersten Laminierstation 12 kann gesteuert bzw. geregelt werden durch das Abwickeln der Flächengebilde 21, 22 und 23 in der ersten Abwickelstation 10. Ebenso kann die Bahnspannung der fertigen Laminatbahn 28 in der Trockenstation 17 hinter der zweiten Laminierstation 14 gesteuert bzw. geregelt werden durch die Aufwickelgeschwindigkeit der Laminatbahn 28 auf der Vorratsrolle 29 in der Aufwickelstation 16.

Die Erfindung eignet sich auf für Laminierstraßen, die mehr als zwei Laminierstationen aufweisen und in den Laminierstationen mehr als zwei Flächengebilde gleichzeitig verklebbar sind. Es ist alternativ vom vorbeschriebenen Verfahren auch möglich, mit der erfindungsgemäßen Laminierstation zugeschnittene Flächengebilde miteinander zu verkleben.

Schließlich ist es auch denkbar, zwischen zwei und mehr als zwei aufeinanderfolgenden Laminierstationen weder eine Meßstation noch eine Trockenstation oder nur eine Meßstation bzw. nur eine Trockenstation vorzusehen. Bei mehr als zwei aufeinanderfolgenden Laminierstationen ist es auch denkbar, nicht zwischen allen aufeinanderfolgenden Laminierstationen eine Trockenstation und/oder eine Meßstation anzuordnen.

Das erfindungsgemäße Verfahren läuft mit der zuvor beschriebenen Vorrichtung im wesentlichen wie folgt ab:

Die von der ersten Abwickelstation 10 kommenden Bahnen der zu verbindenden, äußeren Flächengebilde 21 und 22 und des dazwischenliegenden Flächengebildes 23 mit der zum Verkleben dienenden Haftmasse laufen in Laminierrichtung 11 an der Beschickungsseite 32 in die erste Laminierstation 12 ein. Die Flächengebilde 21, 22 und 23 werden zwischen den zueinanderweisenden Trumen der Transportbänder 30 und 31 durch die erste Laminierstation 12 hindurchtransportiert und dabei in der Heizeinrichtung 34 aufgeheizt und in der Druckeinrichtung 35 miteinander verklebt, nämlich laminiert. Dabei geht das zur Zufuhr des Haftmittels dienende mittige Flächengebilde 23 in die Flächengebilde 21 und 22 auf, indem das Haftmittel in diese Flächengebilde 21 und 22 teilweise eindringt und diese damit verbindet. An der Auslaufseite 33 verläßt die erste Laminierstation 12 somit praktisch nur eine teilweise fertige Laminatbahn aus den miteinander verbundenen äußeren Flächengebilden 21 und 22. Diese teilweise Laminatbahn durchläuft dann die Trockenstation 17 mit der Meßstation 36 hinter der ersten Laminierstation 12 und vor der zweiten Laminierstation 14.

Aufgrund der mit Abstand aufeinanderfolgenden oberen Transportbänder 31 der hintereinander angeordneten Laminierstationen 12 und 14 ist die Oberseite der teilweise fertigen Laminatbahn aus den Flächengebilden 21 und 22 im Bereich der Trockenstation 17 und der Meßstation 36 frei. Darüber hinaus wird im Bereich der Meßstation 36 von den Führungswalzen 37 und 38 und der Meßwalze 39 die teilweise fertige Laminatbahn aus den Flächengebilden 21 und 22 auch vom unteren Transportband 30 der zweiten Laminierstation 14 abgelenkt, nämlich gegenüber dem Obertrum des unteren Transportbandes 30 abgehoben, wodurch auch die Unterseite der tweilweise fertigen Laminatbahn aus den Flächengebilden 21 und 22 frei liegt. Dadurch kann im Bereich der Trockenstation 17 an der allseitig frei liegenden Laminatbahn der Flächengebilde 22 und 23 Ausrüstung und Feuchtigkeit mindestens teilweise entweichen und über die Absaughaube 41 bzw. die Auffangwanne 40 in flüssiger und/oder gasförmiger Form abgeleitet werden. Durch das Abheben der teilweise fertigen Laminatbahn am unteren Transportband 30 kann sich auf diesem kein Kondensat bilden. Es können deshalb die Flächengebilde 21 und 22 beim Einlaufen in die zweite Laminierstation 14 zwischen trockenen Transportbändern 30 und 31 eingebettet werden. Außerdem können die von der zweiten Abwickelstation 13 zugeführten und noch unbehandelten Flächengebilde 26 und 27 mit trockenen Flächengebilden 21 und 22 zusammengeführt werden. Dieses Zusammenführen der an der zweiten Abwickelstation 13 zugeführten Flächengebilde 26 und 27 mit den Flächengebilden 21 und 22, die bereits in der ersten Laminierstation 12 verklebt wurden, erfolgt zwischen der Meßstation 36 und der Beschickungsseite 32 der zweiten Laminierstation 14, und zwar an den Umlenkrollen 42. Dabei kommt das zur Zufuhr von Haftmittel dienende Flächengebilde 26 auf der Oberseite des Flächengebildes 22 zu liegen. Über dem Flächengebilde 26 mit dem Haftmittel befindet sich das mit den Flächengebilden 21 und 22 nachträglich in der zweiten Laminierstation 14 zu verbindende Flächengebilde 27.

Die Meßstation 36 ermittelt die Spannung der bahnförmigen Flächengebilde 21 und 22 zwischen den Laminierstationen 12 und 14. Dazu werden an den Kraftaufnehmern der Meßwalze 39 aufgenommene Meßsiganle von einem Rechner der Steuerung in bahnspannungsproportionale Signale umgewandelt und mit der in der Steuerung eingegebenen Bahnspannung verglichen. Durch eine entsprechende Steuerung bzw. Regelung der Geschwindigkeit der Transportbänder 30 und 31 der zweiten Laminierstation 14 kann so die Bahnspannung der Flächengebilde 21 und 22 zwischen den Laminierstationen 12 und 14 auf einen vorgegebenen Wert, der den gestellten Anforderungen entspricht, gebracht werden.

Die getrennten Laminierstationen 12 und 14 ermöglichen es, die Flächengebilde in den Heizeinrichtungen 34 mit unterschiedlichen Temperaturen zu beaufschlagen. Insbesondere ist es möglich, in der ersten Laminierstation 12 die Flächengebilde 21, 22 und 23 mit höheren Temperaturen zu beaufschlagen als in der zweiten Laminarstation 14. In der zweiten Laminierstation 14 können dadurch Flächengebilde 26 und 27 verarbeitet werden, die temperatursensibler sind. Aus diesem Grunde wird die Vorrichtung üblicherweise derart betrieben, daß die Heizeinrichtung 34 der ersten Laminierstation 12 mit höheren Temperaturen arbeitet als die Heizeinrichtung 34 der zweiten Laminierstation 14.

Die erste Laminierstation 12 wird, wenn es die darin zu verklebenden Flächengebilde 21 und 22 zulassen, mit einer möglichst hohen Temperatur in der Heizeinrichtung 34 betrieben, um in der darauffolgenden Trockenstation 17 das Abdampfen von Ausrüstung und Feuchtigkeit in den Flächengebilden 21, 22 und 23 zu beschleunigen. Dabei wird die Temperatur in der Heizeinrichtung 34 so gewählt, daß erst nach dem Durchlaufen der Druckeinrichtung 35 die Flächengebilde 21, 22 und 23 beginnen, Feuchtigkeit und Ausrüstung abzugeben. Das Abdampfen zwischen den Laminierstationen 12 und 14 führt außerdem dazu, daß mindestens die Flächengebilde 21 und 22 in der zweiten Laminierstation 14 eine minimale Restfeuchte aufweisen, die eine wirksame Laminierung der Flächengebilde 21 und 22, insbesondere des Flächengebildes 22, mit dem erst vor der zweiten Laminierstation 14 zugeführten (dritten) Flächengebilde 23 gewährleistet. Außerdem ermöglicht die verringerte Feuchtigkeit der Flächengebilde 21 und 22 eine Verklebung in der zweiten Laminierstation 14 mit reduzierten Temperaturen, wourch auch temperaturempfindliche Flächengebilde 27 in der zweiten Laminierstation 14 verklebt werden können.

### Bezugszeichenliste :

- 10: Abwickelstation
- 11: Laminierrichtung
- 12: erste Laminierstation
- 13: zweite Abwickelstation
- 14: zweite Laminierstation
- 15: Luftkühlstation
- 16: Aufwickelstation
- 17: Trockenstation
- 18: Vorratsrolle
- 19: Vorratsrolle
- 20: Vorratsrolle
- 21: Flächengebilde
- 22: Flächengebilde
- 23: Flächengebilde
- 24: Vorratsrolle
- 25: Vorratsrolle
- 26: Flächengebilde
- 27: Flächengebilde
- 28: Laminatbahn
- 29: Vorratsrolle
- 30: unteres Transportband
- 31: oberes Transportband
- 32: Beschickungsseite
- 33: Auslaufseite
- 34: Heizeinrichtung
- 35: Druckeinrichtung
- 36: Meßstation
- 37: Führungswalze
- 38: Führungswalze
- 39: Meßwalze
- 40: Auffangwanne
- 41: Absaughaube
- 42: Umlenkrolle

## Patentansprüche

1. Verfahren zum Verbinden vorzugsweise flexibler Flächengebilde (21, 22, 23, 26, 27), wobei
die zu verbindenden Flächengebilde (21, 22, 23, 26, 27) während eines kontinuierlichen Weitertransports unter Beaufschlagung von Wärme und/oder Druck miteinander verbunden und
längs mehrerer in Transportrichtung (11) aufeinanderfolgender Stationen (12, 14) behandelt werden, **dadurch gekennzeichnet, dass**
zwischen zwei aufeinanderfolgenden Stationen (12, 14) die Bahnspannung mindestens eines bahntörmigen Flächengebildes (21, 22) ermittelt wird und
aufgrund der so ermittelten Bahnspannung eine Transportgeschwindigkeit bzw. eine Behandlungsgeschwindigkeit mindestens einer folgenden Station (14). gesteuert und/oder geregelt wird.

2. Verfahren nach Anspruch 1, **dadurch gekennzeichnet, dass** die Bahn der Flächengebilde (21, 22) über drei mit Abstand parallel zueinander angeordnete Walzen (37-39) geführt wird, von denen zwei äussere Walzen (37, 38) als Führungswalzen ausgebildet sind und eine dritte Walze (39) als Messwalze ausgebildet und derart zwischen den Führungswalzen (37, 38) angeordnet ist, dass sie die Bahn der Flächengebilde (21, 22) aus der Ebene der beiden Führungswalzen (37, 38) herausbewegt, und dass zur Ermittlung der Bahnspannung eine Lagerkraft an mindestens einem Lager der Messwalze gemessen wird.

3. Verfahren nach Anspruch 1, **dadurch gekennzeichnet, daß** mindestens ein Teil der zu verbindenden Flächengebilde (21, 22, 23, 26, 27) in aufeinanderfolgenden Stationen thermisch behandelt wird, insbesondere die Flächengebilde (21, 22, 23, 26, 27) in den aufeinanderfolgenden Stationen unterschiedlich thermisch behandelt werden, vorzugsweise mit unterschiedlich hohen Temperaturen.

4. Verfahren nach einem der vorhergehenden Ansprüche, **dadurch gekennzeichnet, daß** zwischen aufeinanderfolgenden Stationen zur thermischen Behandlung eine Reduzierung des Feuchtegehalts mindestens eines Flächengebildes (21, 22) vorgenommen wird.

5. Verfahren nach einem der vorhergehenden Ansprüche, **dadurch gekennzeichnet, daß** in mindestens einer Station die Flächengebilde (21, 22, 26, 27) erwärmt und/oder gekühlt werden, vorzugsweise in einer ersten Station (12) die Flächengebilde (21, 22, 23) nur erwärmt werden und in einer darauffolgenden Laminierstation (14) die Flächengebilde (21, 22, 26, 27) wahlweise erwärmt oder gekühlt bzw. sowohl erwärmt als auch gekühlt werden.

6. Verfahren nach einem der vorhergehenden Ansprüche, **dadurch gekennzeichnet, daß** mindestens ein Flächengebilde (26, 27) zwischen aufeinanderfolgenden Stationen (12,14) zugeführt wird.

7. Verfahren nach einem der vorhergehenden Ansprüche, **dadurch gekennzeichnet, daß** mindestens zwischen zwei aufeinanderfolgenden Stationen den Flächengebilden (21, 22, 23) nur ein Transportband (30) zugeordnet ist.

8. Verfahren nach einem der vorhergehenden Ansprüche, **dadurch gekennzeichnet, daß** zwischen zwei Stationen (12, 14) das oder jedes bahnartige Flächengebilde (21, 22, 23) bereichsweise vom einzigen Transportband (30) abgelenkt wird, vorzugsweise zwischen zwei mit Abstand aufeinanderfolgenden Transportbändern (31) aufeinanderfolgender Stationen (12, 14) das oder jedes Flächengebilde (21, 22, 23) vom anderen Transportband (unteres Transportband 30) abgehoben wird.

9. Vorrichtung zum Verbinden vorzugsweise flexibler Flächengebilde (21, 22, 23, 26, 27) mit mindestens zwei aufeinanderfolgenden, eigenständigen Laminierstationen (12, 14), wobei
mindestens eine Laminierstation (12) zwei Transportbänder (30, 31) aufweist, zwischen deren zu einandergerichteten Trume die Flächengebilde (21, 22, 23, 26, 27) durch die Laminierstation (12) unter Wärmezufuhr und/oder
Druckbeaufschlagung hindurchtransportierbar sind, **gekennzeichnet durch**
eine zwischen zwei aufeinanderfolgenden Stationen (12, 14) angebrachte Messstation (36) zur Ermittlung der Bahnspannung mindestens eines bahnförmigen Flächengebildes (21, 22) und
eine Einrichtung zur Steuerung und/oder Regelung einer Transportgeschwindigkeit bzw. einer
Behandlungsgeschwindigkeit mindestens einer des Messstation nachgeordneten Station (14) aufgrund der ermittelten Bahnspannung.

10. Vorrichtung nach Anspruch 9, **dadurch gekennzeichnet, dass** die Messstation (36) drei mit Abstand parallel zueinander angeordnete Walzen (37-39) beinhaltet, von denen zwei äussere Walzen (37, 38) als Führungswalzen ausgebildet sind und eine dritte Walze (39) als Messwalze ausgebildet und derart zwischen den Führungswalzen (37, 38) angeordnet ist, dass sie die Bahn der Flächengebilde (21, 22) aus der Ebene der beiden Führungswalzen (37, 38) herausbewegt, und dass zur Ermittlung der Bahnspannung an mindestens einem Lager der Messwalze (39) ein Kraftaufnehmer zur Messung einer Lagerkraft angebracht ist.

11. Vorrichtung nach Anspruch 9 oder 10, wobei die Einrichtung zur Steuerung und/oder Regelung einer Transportgeschwindigkeit bzw. einer Behandlungsgeschwindigkeit einen Mikrocomputer oder dergleichen beinhaltet.

12. Vorrichtung nach einen der Ansprüche 9-11 **dadurch gekennzeichnet, daß** zwischen, den aufeinanderfolgenden Laminierstationen (12, 14) mindestens eine Trockenstation (17) mit insbesondere nur einem Transportband (30), angeordnet ist.

13. Vorrichtung nach Anspruch 12, **dadurch gekennzeichnet, daß** der Trockenstation (17) eine Absaugeinrichtung für insbesondere mit Feuchtigkeit oder abgedampfter Ausrüstung angereicherte Luft zugeordnet ist.

14. Vorrichtung nach Anspruch 12 oder 13,
**dadurch gekennzeichnet, daß** die Meßstation (36) der Trockenstation (17) zugeordnet ist und insbesondere gleichzeitig dazu dient, die Bahn der Flächengebilde (21,22) derart abzulenken, dass sie biedseitig freiliegt.

15. Vorrichtung nach einem der Anspruch 9-14, **dadurch gekennzeichnet, daß** mindestens eine auf die erste Laminierstation (12) folgende zweite Laminierstation (14) alternativ zum Laminieren oder Kühlen der Flächengebilde (21, 22, 23, 26, 27) betreibbar ist.

## Claims

1. Method for joining preferably flexible sheet materials (21, 22, 23, 26, 27), in which the sheet materials (21, 22, 23, 26, 27) to be joined are joined to one another during continuous onward conveyance while being subjected to heat and/or pressure and
are treated in the course of a plurality of stations (12, 14) following one another in the conveying direction (11),
**characterised in that**
between two successive stations (12, 14) the web tension of at least one sheet material (21, 22) in web form is determined and
on the basis of the web tension thus determined, a conveying speed or a treatment speed of at least one following station (14) is controlled and/or regulated.

2. Method according to Claim 1, **characterised in that** the web of the sheet materials (21, 22) is guided over three rollers (37-39) arranged with spacing parallel to one another, of which two outer rollers (37; 38) are designed as guide rollers and a third roller (39) is designed as a measuring roller and is arranged between the guide rollers (37, 38) in such a way that it moves the web of the sheet materials (21, 22) out of the plane of the two guide rollers (37, 38), and **in that** to determine the web tension, a bearing force on at least one bearing of the measuring roller is measured.

3. Method according to Claim 1, **characterised in that** at least some of the sheet materials (21, 22, 23, 26, 27) to be joined are thermally treated in successive stations, in particular the sheet materials (21, 22, 23, 26, 27) are subjected in the successive stations to different thermal treatments, preferably to different temperatures.

4. Method according to one of the preceding claims, **characterised in that** a reduction of the moisture content of at least one sheet material (21, 22) is carried out between successive stations for thermal treatment.

5. Method according to one of the preceding claims, **characterised in that** the sheet materials (21, 22, 26, 27) are heated and/or cooled in at least one station, preferably the sheet materials (21, 22, 23) are only heated in a first station (12) and the sheet materials (21, 22, 26, 27) are either heated or cooled or both heated and cooled in a following laminating station (14).

6. Method according to one of the preceding claims, **characterised in that** at least one sheet material (26, 27) is supplied between successive stations (12, 14).

7. Method according to one of the preceding claims, **characterised in that** the sheet materials (21, 22, 23) are assigned only one conveyor belt (30) at least between two successive stations.

8. Method according to one of the preceding claims, **characterised in that**, between two stations (12, 14), the or each web-type sheet material (21, 22, 23) is regionally deflected from the single conveyor belt (30), preferably between two conveyor belts (31), following one another with spacing, of successive stations (12, 14), the or each sheet material (21, 22, 23) is lifted from the other conveyor belt (lower conveyor belt 30).

9. Apparatus for joining preferably flexible sheet materials (21, 22, 23, 26, 27) having at least two successive, independent laminating stations (12, 14), in which
at least one laminating station (12) has two conveyor belts (30, 31), between the mutually facing strands of which the sheet materials (21, 22, 23, 26, 27) can be conveyed through the laminating station (12) while being supplied with heat and/or subjected to pressure,
**characterised by**
a measuring station (36) disposed between two successive stations (12, 14) and serving to determine the web tension
of at least one sheet material (21, 22) in web form and
a device for controlling and/or regulating a conveying speed or a treatment speed of at least one station (14) arranged after the measuring station on the basis of the web tension determined.

10. Apparatus according to Claim 9, **characterised in that** the measuring station (36) includes three rollers (37-39) arranged with spacing parallel to one another, of which two outer rollers (37, 38) are designed as guide rollers and a third roller (39) is designed as a measuring roller and is arranged between the guide rollers (37, 38) in such a way that it moves the web of the sheet materials (21, 22) out of the plane of the two guide rollers (37, 38), and **in that** to determine the web tension, a force transducer is mounted on at least one bearing of the measuring roller (39) for measuring a bearing force.

11. Apparatus according to Claim 9 or 10, in which the device for controlling and/or regulating a conveying speed or a treatment speed includes a microcomputer or the like.

12. Apparatus according to one of Claims 9-11, **characterised in that** at least one drying station (17) with in particular only one conveyor belt (30) is arranged between the two successive laminating stations (12, 14).

13. Apparatus according to Claim 12, **characterised in that** the drying station (17) is assigned an extraction device for air in particular enriched with moisture or evaporated finish.

14. Apparatus according to Claim 12 or 13, **characterised in that** the measuring station (36) is assigned to the drying station (17) and serves in particular at the same time to deflect the web of the sheet materials (21, 22) in such a way that it is exposed on both sides.

15. Apparatus according to one of Claims 9-14, **characterised in that** at least a second laminating station (14) following the first laminating station (12) can be operated for laminating or alternatively cooling the sheet materials (21, 22, 23, 26, 27).

## Revendications

1. Procédé pour assembler des surfaces de préférence flexibles (21, 22, 23, 26, 27), sachant que les surfaces à assembler (21, 22, 23, 26, 27) sont assemblées en étant soumises à la chaleur et/ou à la pression au cours d'un processus de transport ininterrompu et sont traitées le long de plusieurs stations (12, 14) se succédant dans le sens du transport (11), **caractérisé en ce qu'**entre deux stations successives (12, 14), on détermine la tension d'au moins une surface en forme de bande (21, 22) et qu'en fonction de la tension relevée, on commande et/ou on règle une vitesse de transport ou une vitesse de traitement d'au moins une station suivante (14).

2. Procédé selon la revendication 1, **caractérisé en ce que** la trajectoire des surfaces (21, 22) passe sur trois cylindres (37 - 39) disposés parallèlement entre eux et de manière espacée, dont deux cylindres extérieurs (37, 38) sont réalisés en tant que cylindres de guidage et dont un troisième cylindre (39) est réalisé en tant que cylindre de mesure et est disposé entre les cylindres de guidage (37, 38) de telle manière qu'il fait sortir la trajectoire des surfaces (21, 22) du plan formé par les deux cylindres de guidage (37, 38), et **en ce que** pour déterminer la tension de la bande, on mesure la force d'appui au niveau d'au moins un palier du cylindre de mesure.

3. Procédé selon la revendication 1, **caractérisé en ce qu'**au moins une partie des surfaces à assembler (21, 22, 23, 26, 27) est traitée thermiquement dans des stations successives, notamment les surfaces (21, 22, 23, 26, 27) subissent des traitements thermiques différents dans les stations successives, de préférence des traitements à des températures différentes.

4. Procédé selon l'une des revendications précédentes, **caractérisé en ce qu'**entre des stations de traitement thermique successives, on procède à une réduction de la teneur en humidité d'au moins une surface (21, 22).

5. Procédé selon l'une des revendications précédentes, **caractérisé en ce que** dans au moins une station, les surfaces (21, 22, 26, 27) sont chauffées et/ou refroidies, de préférence dans une première station (12), les surfaces (21, 22, 23) ne sont que chauffées et dans une station de laminage suivante (14), les surfaces (21, 22, 26, 27) sont soit chauffées, soit refroidies ou bien à la fois chauffées et refroidies.

6. Procédé selon l'une des revendications précédentes, **caractérisé en ce qu'**au moins une surface (26, 27) est amenée entre deux stations (12, 14) qui se suivent.

7. Procédé selon l'une des revendications précédentes, **caractérisé en ce qu'**au moins entre deux stations successives, seule une bande transporteuse (30) est associée aux surfaces (21, 22, 23).

8. Procédé selon l'une des revendications précédentes, **caractérisé en ce qu'**entre deux stations (12, 14), la ou chaque surface semblable à une bande (21, 22, 23) est déviée de l'unique bande transporteuse (30), de préférence **en ce qu'**entre deux bandes transporteuses se succédant à distance (31), qui appartiennent à des stations successives (12, 14), la ou chaque surface (21, 22, 23) est soulevée de l'autre bande transporteuse (bande transporteuse inférieure 30).

9. Dispositif pour assembler des surfaces de préférence flexibles (21, 22, 23, 26, 27) comprenant aux moins deux stations de laminage autonomes successives (12, 14), sachant qu'au moins une station de laminage (12) présente deux bandes transporteuses (30, 31) entre les brins se faisant face desquelles les surfaces (21, 22, 23, 26, 27) peuvent être transportées à travers la station de laminage (12) tout en étant exposées à la chaleur et/ou à la pression, **caractérisé par** une station de mesure (36) placée entre deux stations successives (12, 14), pour déterminer la tension d'au moins une surface en forme de bande (21, 22), et par un dispositif pour commander et/ou régler une vitesse de transport ou une vitesse de traitement d'au moins une station (14) située en aval de la station de mesure en fonction de la tension relevée.

10. Dispositif selon la revendication 9, **caractérisé en ce que** la station de mesure (36) comprend trois cylindres (37 - 39) disposés parallèlement entre eux et de manière espacée, dont deux cylindres extérieurs (37, 38) sont réalisés en tant que cylindres de guidage et dont un troisième cylindre (39) est réalisé en tant que cylindre mesureur et est disposé entre les cylindres de guidage (37, 38) de telle manière qu'il fait sortir la trajectoire des surfaces (21, 22) du plan formé par les deux cylindres de guidage (37, 38), et **en ce que** pour déterminer la tension de la bande au niveau d'au moins un palier du cylindre de mesure (39), un dynamomètre est prévu pour mesurer une force d'appui.

11. Dispositif selon la revendication 9 ou 10, sachant que le dispositif pour commander et/ou régler une vitesse de transport ou une vitesse de traitement renferme un micro-ordinateur ou analogue.

12. Dispositif selon l'une des revendications 9 à 11, **caractérisé en ce qu'**entre les stations de laminage successives (12, 14) se situe au moins une station de séchage (17) ne comptant notamment qu'une seule bande transporteuse (30).

13. Dispositif selon la revendication 12, **caractérisé en ce qu'**à la station de séchage (17) est associé un dispositif d'aspiration pour évacuer l'air enrichi notamment en humidité ou en produit de l'évaporation.

14. Dispositif selon la revendication 12 ou 13, **caractérisé en ce que** la station de mesure (36) est associée à la station de séchage (17) et sert notamment simultanément à dévier la trajectoire des surfaces (21, 22) de telle sorte qu'elle soit dégagée de part et d'autre.

15. Dispositif selon l'une des revendications 9 à 14, **caractérisé en ce qu'**au moins une seconde station de laminage (14) succédant à la première station de laminage (12) peut être utilisée soit pour laminer, soit pour refroidir les surfaces (21, 22, 23, 26, 27).
